**Europäisches Patentamt**

**European Patent Office**

**Office européen des brevets**

(19)

(11) Veröffentlichungsnummer: **0 302 260 B1**

# EUROPÄISCHE PATENTSCHRIFT

(12)

(45) Veröffentlichungstag der Patentschrift: **23.10.91**

(51) Int. Cl.⁵: **F16B 39/02, //G21C3/32**

(21) Anmeldenummer: **88111053.0**

(22) Anmeldetag: **11.07.88**

(54) **Anordnung zur Verdrehsicherung von Schraubverbindungen.**

(30) Priorität: **24.07.87 DE 3724587**

(43) Veröffentlichungstag der Anmeldung:
**08.02.89 Patentblatt 89/06**

(45) Bekanntmachung des Hinweises auf die
Patenterteilung:
**23.10.91 Patentblatt 91/43**

(84) Benannte Vertragsstaaten:
**AT CH DE LI NL**

(56) Entgegenhaltungen:
**EP-A- 0 130 840      DE-A- 3 329 104**
**DE-C- 2 930 207      FR-A- 331 979**
**GB-A- 2 138 913      US-A- 1 603 618**
**US-A- 3 295 581      US-A- 4 326 825**

(73) Patentinhaber: **SIEMENS AKTIENGESELL-
SCHAFT
Wittelsbacherplatz 2
W-8000 München 2(DE)**

(72) Erfinder: **Jany, Herbert
Sandbergstrasse 11
W-8520 Erlangen(DE)**
Erfinder: **Strobel, Reinhardt, Dipl.-Ing. (FH)
Bertolt-Brecht-Strasse 74
W-8500 Nürnberg 50(DE)**

EP 0 302 260 B1

Rank Xerox (UK) Business Services

## Beschreibung

Die Erfindung betrifft eine Anordnung zur formschlüssigen Verdrehsicherung von Schraubverbindungen, vorzugsweise zur fernbedienbaren Unterwasseranordnung in Reaktordruckbehältern von Kernkraftwerken, unter Verwendung normalen Bolzengewindes und einer Sondermutter mit einem angeformten zur Verformung vorgesehenen Querschnittsteil.

Eine derartige Anordnung ist durch die DE-OS 29 30 207 bekannt geworden. Bei dieser bekannten Anordnung trägt die Sondermutter auf ihrem an dem zu haltenden Bauteil anliegenden Ende eine flanschartig radial vorstehende Scheibe, die formschlüssig mit dem zu haltenden Bauteil in Eingriff gebracht wird. Da diese Scheibe einstückig mit der Mutter sein muß, ergibt sich bei deren Herstellung eine extrem große Zerspanarbeit und ein unerwünscht großer Werkstoffabfallanteil. Nachteilig ist bei der bekannten Anordnung jedoch auch, daß die Wanddicke der Scheibe im Hinblick auf die maximal zulässige Kraft zu ihrer Verformung verhältnismäßig dünn sein muß und daß dementsprechend auch das zur Lösung der Verdrehsicherung nur ein relativ kleines Drehmoment erforderlich ist.

Aus der US-A-3 295 581 ist auch eine Vorrichtung zum Feststellen einer Mutter bekannt, bei der ein kegelförmig ausgebildetes Ende der Mutter in eine ebenfalls kegelförmig ausgebildete Öffnung eines zu haltenden Bauteils formschlüssig eingreift. Bei dieser Ausführung wird eine Verdrehsicherung durch Selbsthemmung der ineinander greifenden kegelförmigen Teile erreicht.

Aus der GB-A-2 138 913 ist ein zweiteiliges Befestigungselement mit einem ein Gewinde aufweisenden Bolzen und einer eine Hülse tragenden Mutter bekannt. Zum Sichern der Mutter wird das freie Ende der gewindefreien Hülse mit Hilfe eines Werkzeugs in das Gewinde des Bolzens gepreßt.

Der Erfindung liegt daher die Aufgabe zugrunde, zur formschlüssigen Verdrehsicherung von Schraubverbindungen unter Verzicht auf zusätzliche Bauteile eine fernbedienbare und bedingt lösbare Anordnung zu schaffen, in der Mutter und Gewindebolzen unverlierbar zusammenhalten, wobei zusätzlich eine wirtschaftliche Ausnutzung des bei der Herstellung eingesetzten Werkstoffes gewährleistet sein soll.

Erfindungsgemäß ist diese Aufgabe bei einer Anordnung der eingangs genannten Art dadurch gelöst, daß ein zur Verformung vorgesehener Querschnittsteil der Sondermutter ein von einer dünnwandigen Hülse getragener Wulst an dem freien Ende der Sondermutter ist, daß sich das Muttergewinde unterbrechungsfrei auch durch die Hülse und den Wulst erstreckt und daß sich das Bolzengewinde ebenfalls bis durch den Wulst hindurch erstreckt, daß ein Druckstück mit einer sich kegelförmig vereengenden Bohrung axial auf den Wulst aufpreßbar ist und den Wulst plastisch im wesentlichen radial verformt und daß der Wulst durch seine radiale Verformung in das Bolzengewinde hineingedrückt ist.

Nach zweckmäßigen Ausgestaltungen der Erfindung ist vorgesehen, daß die radiale Verformung des Wulstes an gleichmäßig auf den Umfang verteilten Stellen verstärkt ist, indem in der kegelförmigen Bohrung in achsparallelen Ebenen Rippen vorgesehen sind und/oder daß im Bereich des Wulstes ein Teil des Bolzengewindes weggeschnitten ist und/oder daß im Bereich des Wulstes das Bolzengewinde durch den eindringenden Wulst örtlich verformt ist.

Nach vorteilhaften Ausgestaltungen der Erfindung ist die Gesamthöhe der Sondermutter etwa gleich dem doppelten Außendurchmesser des Gewindes und sind die axialen Abmessungen der Hülse und des Wulstes zusammen kleiner als die restliche Höhe der Sondermutter und liegt die Konizität der sich kegelförmig verengenden Bohrung außerhalb des Bereiches der Selbsthemmung des Druckstückes auf dem Wulst.

Die erfindungsgemäße Anordnung zur formschlüssigen Verdrehsicherung von Schraubverbindungen ist sehr vorteilhaft, da sie einfach und vor allem fernbedienbar herstellbar ist und da die Sondermutter und den Gewindebolzen praktisch unverlierbar zusammengehalten sind und da außerdem infolge des Verzichts auf separate Sicherungselemente, wie beispielsweise Scheiben, enge Toleranzen ermöglicht sind und durch Vermeidung zusätzlicher Trennfugen durch diese bedingte Setzungserscheinungen nicht auftreten.

Ausführungsbeispiele werden anhand einer Zeichnung näher erläutert. Im einzelnen zeigen

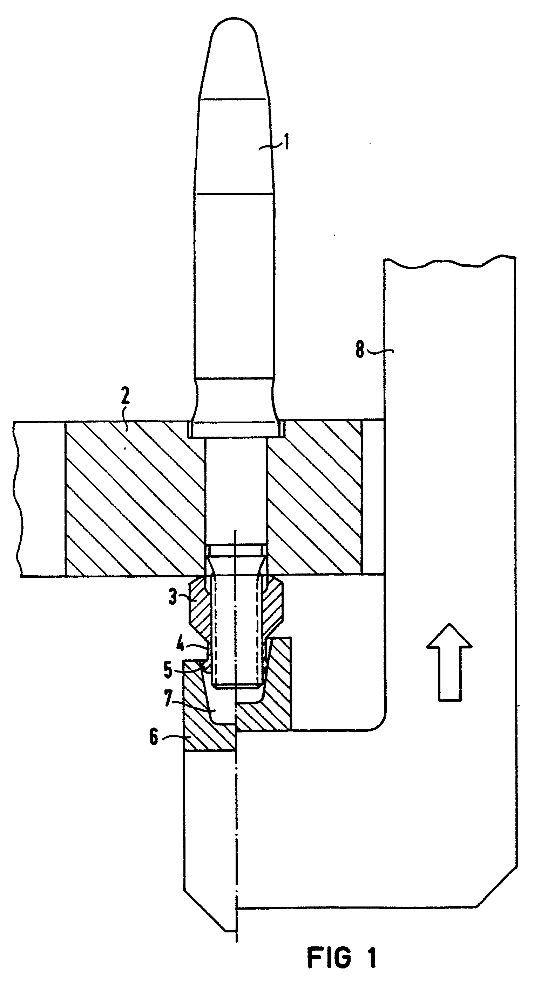

FIG 1 einen Längsschnitt durch die Sicherung eines Führungsbolzens mit angesetztem bzw. mit aufgepreßtem Druckstück.

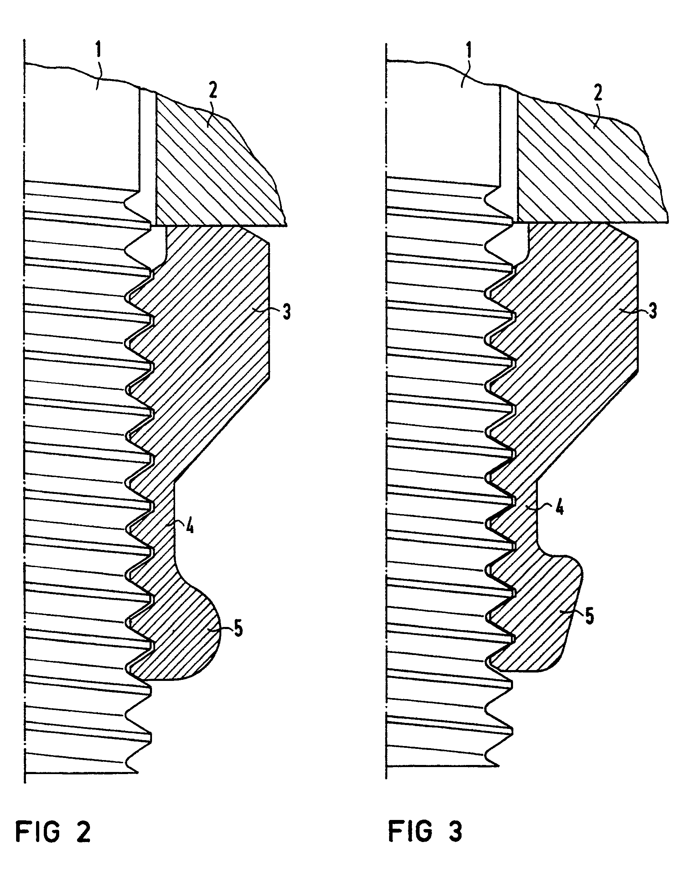

FIG 2 einen Schnitt durch eine aufgeschraubte Sondermutter in stark vergrößertem Maßstab und

FIG 3 einen Schnitt durch die aufgeschraubte und verformte Sondermutter ebenfalls in stark vergrößertem Maßstab.

FIG 4 einen Schnitt und

FIG 5 eine Draufsicht auf ein Druckstück mit glatter kegelförmiger Bohrung.

FIG 6 einen Schnitt und

FIG 7 eine Draufsicht auf ein Druckstück mit in achsparallelen Ebenen der kegelförmigen Bohrung vorgesehenen Rippen.

Einander entsprechende Teile sind in allen Figuren mit den gleichen Bezugszeichen versehen.

Ein nach oben gerichteter Führungsstift 1 für Brennelemente von Kernreaktoren ist an seinem unteren Teil in einer nur ausschnittsweise dargestellten Gitterplatte 2 geführt und in dieser durch eine Sondermutter 3 gehalten. Die Sondermutter 3 trägt auf einer dünnwandigen Hülse 4 einen Wulst 5. Das Mutterngewinde erstreckt sich lückenlos über die gesamte Länge der Sondermutter sowie über die von dieser getragenen Hülse 4 und den Wulst 5. Die Gewindelänge in der Sondermutter allein ohne Hülse 4 und Wulst 5 ist mindestens so groß wie die Gewindelänge in Normmuttern. Das Bolzengewinde des Führungsstiftes 1 durchsetzt die Sondermutter 3 sowie die Hülse 4 und den Wulst 5 auf deren ganzer Länge.

Die Sondermutter 3 ist als Rund-, Loch-, Vier- oder Sechskantmutter oder in einer beliebigen anderen Querschnittsform ausgeführt. Die Hülse 4 und der Wulst 5 sind im Querschnitt kreisringförmig.

Das Bolzengewinde des Führungsstiftes 1 ist beim dargestellten Ausführungsbeispiel zwar lükkenlos ausgeführt, wird jedoch mitunter in nicht dargestellter Art und Weise mit Ausnehmungen in Umfangsrichtung versehen oder einzelne Gewindegänge, insbesondere in Höhe des Wulstes 5, fehlen oder weichen in ihrer Form vom normalen Querschnitt ab.

Nach dem Aufschrauben der Sondermutter 3 wird diese zunächst auf nicht näher dargestellte Art und Weise mit dem vorgeschriebenen Drehmoment festgezogen. Im Anschluß hieran wird ein Druckstück 6 mit einer sich in axialer Richtung kegelförmig verengenden Bohrung 7 axial auf den Wulst 5 aufgesetzt und durch einen vorzugsweise hydraulisch betätigten Zangenarm 8 in Richtung auf den Wulst 5 gepreßt. Der Wulst 5 wird dabei plastisch im wesentlichen in radialer Richtung verformt. Diese Verformung erstreckt sich auch auf die Innenseite des Wulstes 5, der seinerseits die in seinem Bereich liegenden Gewindegänge des Bolzengewindes verformt und danach spielfrei umfaßt.

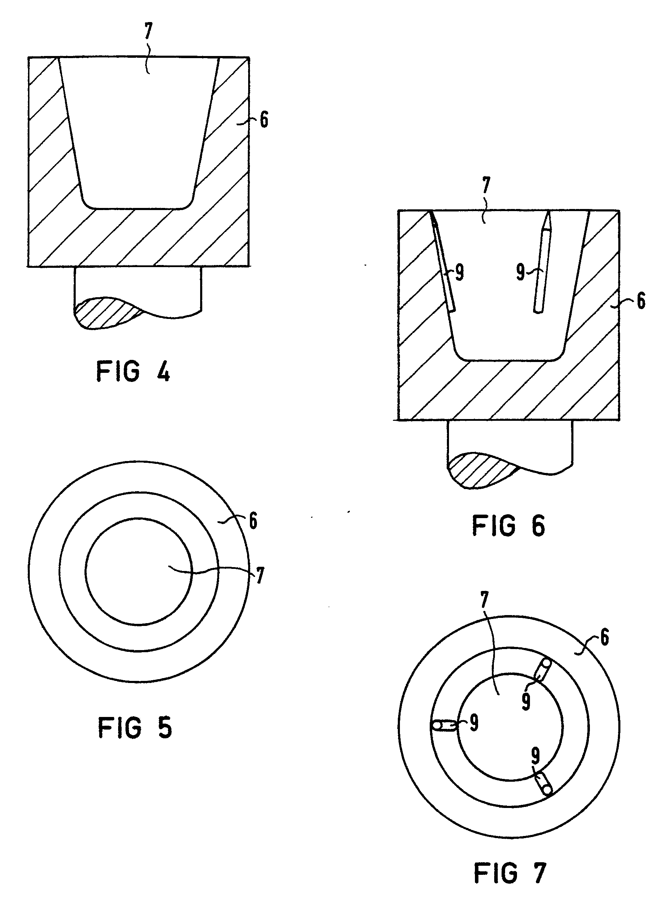

Beim Einsatz eines Druckstückes 6 gemäß den Figuren 4 und 5 wird der Wulst 5 und damit auch der unter ihm liegende Bolzengewindeabschnitt auf seinem Umfang gleichmäßig verformt, wozu eine mäßig große Preßkraft erforderlich ist.

Dagegen erlaubt die Ausführung des Druckstückes 6 mit auf achsparallelen Ebenen liegenden Rippen 9 gemäß FIG 6 und 7 deutlich geringere Preßkräfte zur Erzielung einer gleich gut sichernd wirkenden Verformung des Wulstes 5. Die Rippen 9 sind gleichmäßig auf den Umfang der Bohrung 7 verteilt, so daß auch das hiermit versehene Druckstück selbstzentrierend ist. Infolge des Eindringens der Rippen 9 in den Wulst 5 wird dieser an den diesen gegenüberliegenden Stellen örtlich viel stärker verformt als an den zwischen den Rippen 9 liegenden Umfangsabschnitten, wobei auch die Verformung des Bolzengewindes ungleich auf den Umfang verteilt ist.

In einem Versuch wurde eine mit einem Gewinde M 14 versehene Sondermutter 3 mit 75 Nm Vorspanndrehmoment angezogen, nach einer Minute gelöst und dann mit einem Nenndrehmoment von 60 Nm verspannt. Im Anschluß an die danach erfolgte Verformung des Wulstes 5 ergab sich ein Lösemoment von 45 Nm. Bei weiterem Losdrehen erhöhte sich das Moment jedoch sehr schnell auf über 120 Nm, wobei der Wulst 5 sich nicht mitgedreht und wie eine Kontermutter gewirkt hat. Beim weiteren gewaltsamen Losdrehen der Sondermutter 3 wurde die Hülse 4 zerstört und ein vollständiges Lösen der Sondermutter 3 war danach erst nach einem Abschneiden des freien Endes des Gewindebolzens von dem Führungsstift 1 möglich.

Ein Einsatz der erfindungsgemäßen Anordnung zur formschlüssigen Verdrehsicherung ist daher überall dort angezeigt, wo ein Abfallen einer Mutter auch nach deren selbständigen, unbeabsichtigten Lösen zuverlässig verhindert werden soll.

## Patentansprüche

1. Anordnung zur formschlüssigen Verdrehsicherung von Schraubverbindungen, vorzugsweise zur fernbedienbaren Unterwasseranordnung in Reaktordruckbehältern von Kernkraftwerken, unter Verwendung normalen Bolzengewindes und einer Sondermutter (3) mit einem angeformten zur Verformung vorgesehenen Querschnittsteil, **dadurch gekennzeichnet,**
   - daß der zur Verformung vorgesehene Querschnittsteil ein von einer dünnwandigen Hülse (4) getragener Wulst (5) an dem freien Ende der Sondermutter (3) ist,
   - daß sich das Muttergewinde unterbrechungsfrei auch durch die Hülse (4) und den Wulst (5) erstreckt und daß sich das Bolzengewinde bis durch den Wulst (5) hindurch erstreckt,
   - daß ein Druckstück (6) mit einer sich kegelförmig verengenden Bohrung (7) axial auf den Wulst (5) aufpreßbar ist und den Wulst (5) plastisch im wesentlichen radial verformt und
   - daß der Wulst (5) durch seine radiale Verformung in das Bolzengewinde hineingedrückt ist.

2. Anordnung nach Anspruch 1, **dadurch gekennzeichnet,** daß die radiale Verformung des Wulstes (5) an gleichmäßig auf den Umfang verteilten Stellen verstärkt ist, indem in der kegelförmigen Bohrung (7) in achsparallelen Ebenen Rippen (9) vorgesehen sind.

3. Anordnung nach Anspruch 1 oder 2, **dadurch gekennzeichnet,** daß im Bereich des Wulstes (5) ein Teil des Bolzengewindes weggeschnitten ist.

4. Anordnung nach einem der Ansprüche 1 bis 3, **dadurch gekennzeichnet,** daß im Bereich des Wulstes (5) das Bolzengewinde durch den eindringenden Wulst örtlich verformt ist.

5. Anordnung nach einem der Ansprüche 1 bis 4, **dadurch gekennzeichnet,** daß die Gesamthöhe der Sondermutter (3) etwa gleich dem doppelten Außendurchmesser des Gewindes ist.

6. Anordnung nach einem der Ansprüche 1 bis 5, **dadurch gekennzeichnet,** daß die axialen Abmessungen der Hülse (4) und des Wulstes (5) zusammen kleiner sind als die restliche Höhe der Sondermutter (3).

7. Anordnung nach einem der Ansprüche 1 bis 6, **dadurch gekennzeichnet,** daß die Konizität der sich kegelförmig verengenden Bohrung (7) außerhalb des Bereiches der Selbsthemmung des Druckstückes (6) auf dem Wulst (5) liegt.

8. Anordnung nach einem der Ansprüche 1 bis 7, **dadurch gekennzeichnet,** daß das Druckstück (7) hydraulisch betätigbar ist.

**Claims**

1. An arrangement for form-locking torsion prevention in screw connections, preferably for a remote-controllable underwater arrangement in reactor pressure containers of nuclear power plants, using a normal bolt thread and a special nut (3) with a preformed cross-sectional part provided for deformation,
characterised in that
   - the cross-sectional part provided for deformation is a bead (5) supported by a thin-walled sheath (4) on the free end of the special nut (3),
   - in that the nut thread extends without interruption even through the sheath (4) and the bead (5), and in that the bolt thread extends (up to and) through the bead (5),
   - in that a thrust piece (6) is able to be pressed with a conically tapering bore (7) axially onto the bead (5) and plastically deforms the bead (5) in a substantially radial manner and
   - in that the bead (5) is pressed through its radial deformation into the bolt thread.

2. An arrangement according to claim 1, characterised in that the radial deformation of the bead (5) is increased at points which are evenly distributed over the periphery, in that ribs (9) are provided in the conical bore (7) in axially parallel planes.

3. An arrangement according to claim 1 or 2, characterised in that in the region of the bead (5) a section of the bolt thread is cut away.

4. An arrangement according to one of claims 1 to 3, characterised in that in the region of the bead (5) the bolt thread is locally deformed by the penetrating bead.

5. An arrangement according to one of claims 1 to 4, characterised in that the overall height of the special nut (3) is approximately equal to the twice the outer diameter of the thread.

6. An arrangement according to one of claims 1 to 5, characterised in that the axial dimensions of the sheath (4) and of the bead (5) together are less than the remaining height of the special nut (3).

7. An arrangement according to one of claims 1 to 6, characterised in that the conicity of the conically tapering bore (7) lies outside the region of self-locking of the thrust piece (6) on the bead (5).

8. An arrangement according to one of claims 1 to 7, characterised in that the thrust piece (7) is able to be actuated hydraulically.

**Revendications**

1. Dispositif pour réaliser le blocage en rotation, par formes complémentaires, de liaisons à vis, destiné de préférence à être installé d'une manière pouvant être télécommandée sous l'eau dans des caissons sous pression de réacteurs de centrales nucléaires, moyennant l'utilisation d'un filetage normal de boulon et d'un écrou spécial (3) possédant une partie en coupe transversale formée par moulage et destinée à se déformer, caractérisé par le fait
   - que la partie en coupe transversale destinée à se déformer est un bourrelet (5), qui est porté par une douille à paroi mince (4) et est situé sur l'extrémité libre de l'écrou spécial (3),
   - que le taraudage de l'écrou s'étend continûment également à l'intérieur de la douille (4) et du bourrelet (5) et que le filetage du boulon s'étend jusque et à travers le bourrelet (5),

- qu'un élément de serrage (6) possédant un perçage (7) rétréci en forme de cône peut être emmanché à force axialement sur le bourrelet (5) et déformer ce dernier élastiquement, sensiblement radialement, et

- que le bourrelet (5) est repoussé, sous l'effet de sa déformation radiale, dans le filetage du boulon.

2. Dispositif selon la revendication 1, caractérisé par le fait que la déformation radiale du bourrelet (5) est amplifiée en des emplacements répartis uniformément sur le pourtour, par le fait que des nervures (9) sont prévues dans le perçage conique (7), dans des plans parallèles à l'axe.

3. Dispositif suivant la revendication 1 ou 2, caractérisé par le fait qu'une partie du filetage du boulon est supprimée dans la zone du bourrelet (5).

4. Dispositif suivant l'une des revendications 1 à 3, caractérisé par le fait que le filetage du boulon est déformé localement sous l'effet de la pénétration du bourrelet (5), au niveau de ce dernier.

5. Dispositif suivant l'une des revendications 1 à 4, caractérisé par le fait que la hauteur totale de l'écrou spécial (3) est approximativement égale au double du diamètre extérieur du filetage.

6. Dispositif suivant l'une des revendications 1 à 5, caractérisé par le fait que la somme des dimensions axiales de la douille (4) et du bourrelet (5) est inférieure à la hauteur résiduelle de l'écrou spécial (3).

7. Dispositif suivant l'une des revendications 1 à 6, caractérisé par le fait que la conicité du perçage (7), rétréci avec une forme conique, est située à l'extérieur de la zone d'autoblocage de l'élément de serrage (6) sur le bourrelet (5).

8. Dispositif suivant l'une des revendications 1 à 7, caractérisé par le fait que l'élément de serrage (7) peut être actionné hydrauliquement.

1

2

8

3

4

5

7

6

# FIG 1

FIG 2

FIG 3

FIG 4

FIG 5

FIG 6

FIG 7